# EUROPEAN PATENT SPECIFICATION

(11) **EP 3 817 906 B1**
(45) Date of publication and mention of the grant of the patent: **06.08.2025**
(21) Application number: 19740182.1
(22) Date of filing: 26.06.2019
(51) Int. Cl.: B29C 48/32, B29C 48/09, B29C 48/25, B29C 48/70

(54) **EXTRUSION DEVICE HAVING A FIXED PROFILE**
EXTRUSIONSVORRICHTUNG MIT EINEM FESTEN PROFIL
DISPOSITIF D'EXTRUSION À PROFIL FIXE

(30) Priority: 03.07.2018 US 201862693700 P
(43) Date of publication of application: 12.05.2021
(73) Proprietor: Corning Incorporated, Corning, New York 14831 (US)
(72) Inventor: CADOTTE, JR., John Claude, Waterboro, Maine 04087 (US); SCHAEFER, Michael Kurt, Gorham, Maine 04038 (US); SEYMOUR, James Mark, Portland, Maine 04103 (US)
(74) Representative: Elkington and Fife LLP
(86) International application number: PCT/US2019/039232
(87) International publication number: WO 2020/009866

(56) References cited:
- EP-A1- 3 100 843
- EP-B1- 3 100 843
- WO-A1-2016/043694
- CN-U- 201 489 918
- CN-U- 205 853 322
- JP-B2- 3 474 598
- US-A- 2 817 113
- US-A- 3 111 714
- US-A- 3 899 276

## Description

### FIELD

The present disclosure generally relates to extrusion devices having an extrusion die and more particularly to extrusion dies for forming tubular articles.

### BACKGROUND

In conventional extrusion processes, molten polymer materials are extruded through an extruder die for forming extrusions of various shapes and/or configurations. For example, in the extrusion of polymer tubes, a molten polymeric material typically is extruded through an extrusion head that includes a die bushing and a die pin so that a hollow, tubular extrusion is formed. In general, a tubular extrusion is formed by feeding polymeric material into an extruder where it is subjected to high temperatures to create a molten substrate known as a melt. The melt proceeds through an extrusion head, at the end of which the melt passes through a die. The die contains the circular cross-sectional profile shape to be extruded. The melt hardens as it exits the die in the desired cross-sectional form. The hardened material forms a tube that can grow to arbitrary length as additional melt is extruded and can be further processed to into any desired shape or configuration.

The ultimate shape of the extrusion is determined by a melt flow passage in the die between a die bushing which surrounds a die pin or mandrel. For circular pipe, the die pin is circular in cross-section and an opening in the die bushing which surrounds the die pin is circular. In addition to controlling the shape of the die opening, the location of the die pin in the die bushing controls the wall thickness of the tube.

Although certain specific embodiments shown and described herein are directed to tubular shapes have substantially circular cross-sections, it is contemplated that other shapes may be used in one or more embodiments. Thus, the term "tubular," as used herein, may refer to hollow structures of various cross-sectional shapes, including circular, oval, triangular, square, rectangular, and other shapes. For example, the cross-sectional shape a tubular body may have one or more sides with straight and/or curved portions, including simple or complex curves, or curves of different or varying curvatures. Straight portions of a tubular body may be connected by one or more vertices, and the tubular body may have a cross-section with 1, 2, 3, 4, 5, 6, 7, 8, 9, 10, or greater number of sides, surfaces, or facets.

In conventional extrusion dies, the shape of the die opening between the die pin and die bushing is adjusted by laterally shifting the die bushing relative to the die pin. In certain extrusion dies, this is accomplished by manually loosening and tightening several radial bolts that engage the die bushing around the circumference of the bushing. In other extrusion dies, the die pin may alternatively, or additionally, be adjustable relative to the die bushing. Manual adjustment of the die bushing or the die pin to control the thickness of the tube is a difficult, imprecise, and time-consuming process. This is in part due to the extrusion end of the die being located closely adjacent to a blow molding machine where, during operation, molds are rapidly moved toward and away from the die head which causes the die to be exposed to high temperature conditions. Additionally, the actual movement of the die bushing and the die pin in response to tightening or loosening of the bolts is not assured because of stick slip due to the tightness with which the bushing and/or the pin is held in place by a clamp nut.

Adjustment of the bushing and/or the pin may require an entire system to be shut down in order to permit tightening and loosening of the bolts. There is considerable down time and lost production during such adjustments. Further, it is often unclear if the tightening and loosening of the bolts does in fact locate the bushing and/or the pin in the desired position. Often the actual position of the bushing and pin can only be determined by re-starting the entire system, forming tubes with the bushing and/or pin in their new positions and then checking the wall thickness of the resulting tubes to determine whether the intended adjustment has been achieved. Frequently, it is necessary to shut down the system additional times to make further adjustments to achieve a desired positioning of the bushing and/or the pin. Alternatively, adjustment of the bushing and/or the pin in certain systems may be performed without shutting down the entire system. However, such "live adjustment" results in material waste while the system continues to operate during bushing and/or the pin adjustment.

In applications where precise and uniform tubing wall thickness is desired, the distance between the die bushing and the die pin must be maintained throughout the extrusion process. Uniform tubing wall thickness is maintained by keeping the die pin located axially or concentrically in the die bushing. However, the pin is often shifted as a result of the extrusion process such that the pin becomes located to one side of the bushing and the tubes formed after such shifting are thinner on one side than on an opposite side. As such, conventional extrusion dies cannot provide a continuous process.

The deficiencies of conventional extrusion dies described above are exacerbated by reductions in target dimensions of the formed tube. For example, as compared to plastic piping having an outer diameter of about 3.0 inches or more, a tube having an outer diameter of less than about 0.05 inches is formed using a die having a bushing with a significantly smaller outer diameter. Additionally, the smaller tube is formed using a die pin having a smaller outer diameter. The smaller bushing and pin are more likely to deform under the high processing temperatures of extrusion process, which in turn increases the likelihood of the die pin because misaligned. Also, the smaller bushing and pin are more flexible and more likely to bend and/or break under forces exerted during the extrusion process.
US 2817113 A discloses an extruder assembly for extrusion of tetrafluoroethylene polymer tubes. JP 3474598 B2 discloses a tube extrusion mold used for molding glass or plastic material. US 3111714 A discloses a self-centering extrusion die for extruding tubular products. CN 201489918 U discloses a core-free wire and cable extrusion head mold. CN 205853322 U discloses an extrusion die, including an extrusion die body and a forming mandrel.

### SUMMARY

According to an aspect of the invention, an extrusion device is provided as defined in claim 1.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

The disclosure will be understood more clearly from the following description and from the accompanying figures, given purely by way of non-limiting example, in which:
Figure 1 illustrates a partial cross-section of an extrusion device
Figure 2 illustrates an enlarged partial cross-sectional view of the extrusion die of the extrusion device of Figure 1;
Figures 3A-3F illustrate exemplary extrusion dies having different configurations and different numbers of die pin support features;
Figure 4A illustrates an exemplary extrusion die having die pin support features;
Figure 4B illustrates a cross-sectional view of an extrusion die having discrete die pin support features;
Figure 4C illustrates a cross-sectional view of an extrusion die having continuous die pin support features;
Figure 5 illustrates an extrusion die having curved surfaced die pin support features which form the boundaries of holes in accordance with embodiments of the present disclosure;
Figure 6A illustrates an extrusion die having die pin support features extending from the surface of the die pin
Figure 6B illustrates a cross-sectional view of the extrusion die of Figure 6A; and
Figure 7 illustrates an extrusion die having spiral groove die pin support features

### DETAILED DESCRIPTION

Reference will now be made in detail to the present embodiment(s), an example(s) of which is/are illustrated in the accompanying drawings. Whenever possible, the same reference numerals will be used throughout the drawings to refer to the same or like parts.

The singular forms "a," "an" and "the" include plural referents unless the context clearly dictates otherwise. The endpoints of all ranges reciting the same characteristic are independently combinable and inclusive of the recited endpoint. All references are incorporated herein by reference.

As used herein, "have," "having," "include," "including," "comprise," "comprising" or the like are used in their open ended sense, and generally mean "including, but not limited to."

All scientific and technical terms used herein have meanings commonly used in the art unless otherwise specified. The definitions provided herein are to facilitate understanding of certain terms used frequently herein and are not meant to limit the scope of the present disclosure.

The present disclosure is described below, at first generally, then in detail on the basis of several exemplary embodiments. The features shown in combination with one another in the individual exemplary embodiments do not all have to be realized. In particular, individual features may also be omitted or combined in some other way with other features shown of the same exemplary embodiment or else of other exemplary embodiments.

Embodiments of the present disclosure relate to extrusion devices having an extrusion die. The extrusion die includes a die pin extending through, and centrally positioned in, a channel of the extrusion die. The extrusion die also includes at least one die pin support feature that is configured to retain the position of the die pin within the channel and to prevent shifting of the die pin. The die pin support feature facilitates consistent melt flow out of the extrusion die and minimizes variations in wall thickness of the extruded parison. This consistency eliminates the need to adjust the die and/or die pin and thereafter test the wall thickness of the extruded parison by trial and error. This in turn reduces downtime, loss of production and material waste associated with extrusion dies that do not include die pin support features as described herein. The die pin support feature also provides support to the die pin, which further reduces the likelihood that the die pin will become deformed and/or misaligned due to the extrusion process conditions, and also reduces the likelihood that the die pin may become damaged and require replacement.

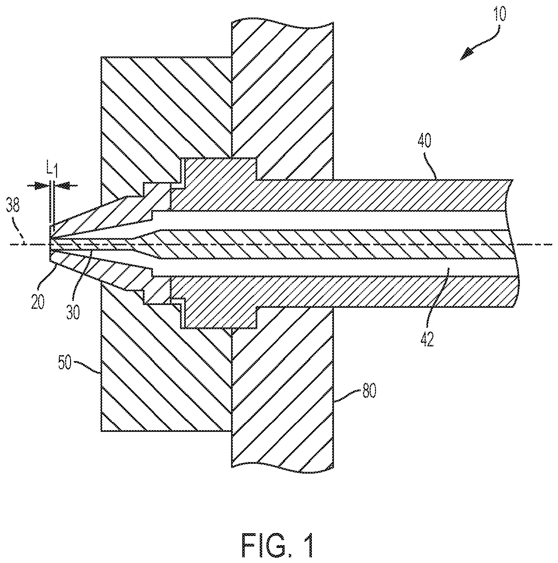

Figure 1 illustrates a partial cross-section of an extrusion device in accordance with embodiments of the present disclosure. The extrusion device 10 as shown includes a die bushing 20 and die pin 30. The die pin 30 extends through a barrel 40 and is centrally positioned in bore 42 of the barrel 40. The extrusion device 10 further includes a collar 50 positioned over the die bushing 20 and barrel 40 and attached to a face plate 80 to maintain the relative position of the die bushing 20 and barrel 40 and to provide support thereto.

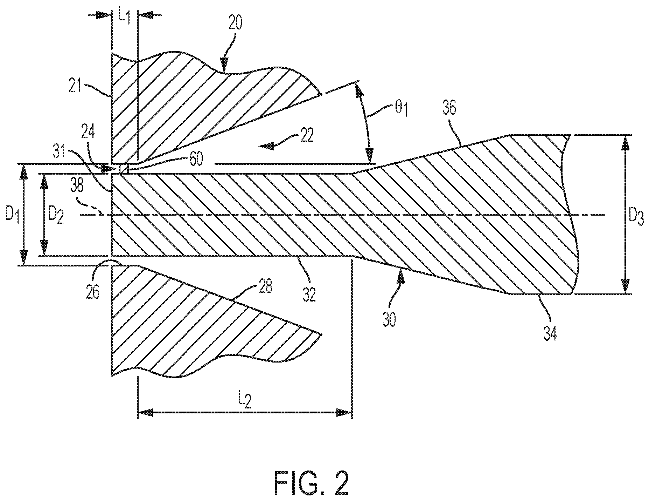

Referring now to Figure 2, an enlarged partial cross-sectional view of the extrusion die of Figure 1 is shown. Die bushing 20 is shown with a channel 22 that extends through the die bushing 20 and terminates in an opening 24. The opening 24 is generally circular with a diameter D1 in the range of, for example, but without limitation, about 0.05 inches to about 0.15 inches, or in the range of about 0.075 inches to about 0.145 inches, or even in the range of about 0.09 inches to about 0.14 inches. The die bushing 20 includes a first section 26 having a generally cylindrical shape and a length L₁, along a longitudinal axis 38 of the die bushing 20, known conventionally as the "land length" of the die. The length L₁ of the first section 26 may be in the range of, for example, but without limitation, about 0.2 inches to about 3.0 inches, or in the range of about 0.25 inches to about 2.5 inches. The die bushing 20 further includes a second section 28 having a generally frusto-conical shape with a surface that forms an angle θ1 with the longitudinal axis 38. The angle θ1 may be between about 5 degrees and about 45 degrees, or between about 7.5 degrees and about 35 degrees, or even between about 10 degrees and about 25 degrees.

As shown in Figure 2, the die pin 30 extends through the channel 22 and is centrally positioned therein, the distal section 32 of the die pin 30 extending through the first section 26 and terminating at the opening 24 of the die bushing 20 (i.e., the distal face 31 of the die pin 30 is approximately parallel to and coincident with the distal face 21 of the die bushing 20). Optionally, the distal end of the die pin 30 can be offset from the opening 24 by a short length in either direction (i.e., stopping proximal of the opening 24 or extending through the opening 24). The die pin 30 is generally cylindrical in shape and includes distal section 32 with a diameter D2 less than a diameter D3 of a proximal section 34. The diameter D2 of the distal section 32 may be in the range of, for example, but without limitation, about 0.025 inches to about 0.085 inches, or in the range of about 0.03 inches to about 0.08 inches, or even in the range of about 0.035 inches to about 0.075 inches. A transition region 36 transitions the die pin 30 from the proximal section 34 to the distal section 32, the transition region 36 forming an angle with respect to a longitudinal axis of the die pin 30 of between about 1 degree to about 45 degrees, or between about 2.5 degrees and about 35 degrees, or even between about 5 degrees and about 25 degrees.

Referring again to Figure 2, the die bushing 20 further includes a die pin support feature 60 extending between the die pin 30 and the die bushing 20. As shown, the die pin support feature 60 is disposed in the first section 26 of the die bushing 20. The die pin support feature 60 retains the position of the die pin 30 within the channel 22 to prevent shifting of the die pin 30, which in turn ensures a uniform wall thickness of the extruded parison. As will be explained in more detail below, in describing the die pin support feature 60 as extending between the die pin 30 and the die bushing 20, it is not meant to limit embodiments of the present disclosure to a particular configuration. For example, the die pin support feature 60 may extend from a first end that is attached to the die bushing 20 to a second end that is attached to the die pin 30. According to embodiments of the present disclosure, and as will be described in greater detail below, the die pin support feature 60 may be integrally formed on a surface of the die bushing 20 and extend into the channel in the direction of the die pin 30. Alternatively, and as will be described in greater detail below, the die pin support feature 60 may be integrally formed on a surface of the die pin 30 and extend into the channel 22 in the direction of the die bushing 20.

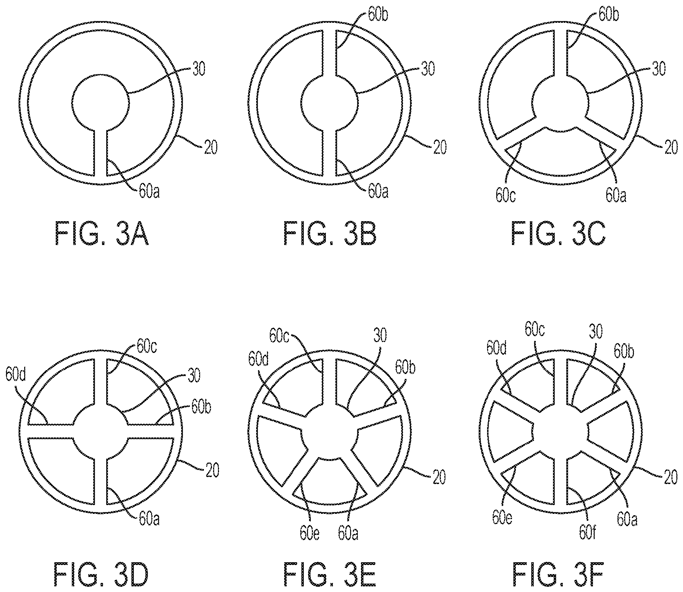

Figure 2 shows an extrusion device 10 having a single die pin support feature 60; however, it should be appreciated that extrusion devices 10 in accordance with embodiments of the present disclosure may include any number of die pin support features 60. Figures 3A-3F show exemplary extrusion devices 10 each having different configurations and different numbers of die pin support features 60. Figure 3A shows an extrusion device 10 that includes a single die pin support feature 60a. Figure 3B shows an extrusion device 10 that includes two die pin support features 60a, 60b separated by about 180 degrees of the circumference of the die pin 30. Figure 3C shows an extrusion device 10 that includes three die pin support features 60a, 60b, 60c separated by about 120 degrees of the circumference of the die pin 30. Figure 3D shows an extrusion device 10 that includes four die pin support features separated by about 90 degrees of the circumference of the die pin 30. Figure 3E shows an extrusion device 10 that includes five die pin support features separated by about 72 degrees of the circumference of the die pin 30. Figure 3F shows an extrusion device 10 that includes six die pin support features separated by about 60 degrees of the circumference of the die pin 30. The configurations and the number of die pin support features 60 shown in Figures 3A-3F are meant to be exemplary and non-exhaustive illustrations of embodiments according to the present disclosure. It should be appreciated that extrusion devices 10 as described herein may include any number of die pin support features 60 in any configuration so long as the melt is permitted to flow through channel 22 to opening 24. Furthermore, it should be appreciated that while the figures illustrate several exemplary shapes, the die pin support features 60 may have any shape that retain the position of the die pin within the channel 22 while also permitting flow of the melt through channel 22 to opening 24.

According to one or more embodiments herein, the arrangement of the die pin and die pin support feature(s) within the bushing may help to achieve improve concentricity in the extruded shape. As used herein, "concentricity" refers to the alignment of the geometric center of a shape circumscribed by the inner surface of the tubular body with the geometric center of a shape circumscribed by the outer surface of the tubular body. An extruded shape having a high degree of concentricity will have these centers nearly or substantially aligned, while an extruded shape having a low degree of concentricity will have these centers separated and not substantially aligned.

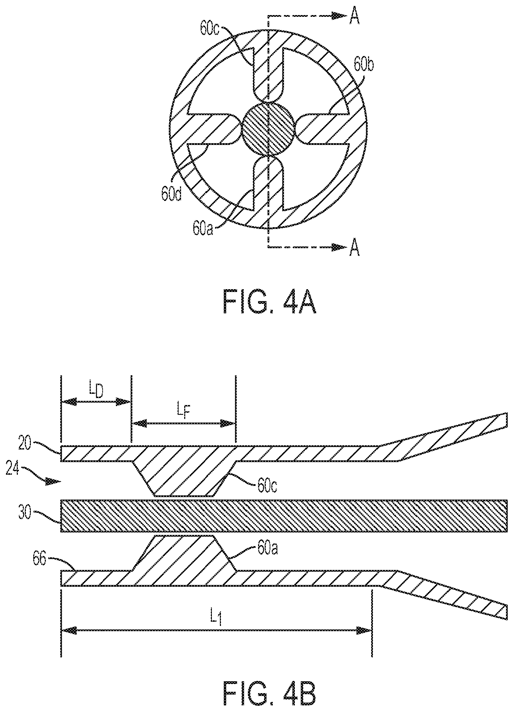

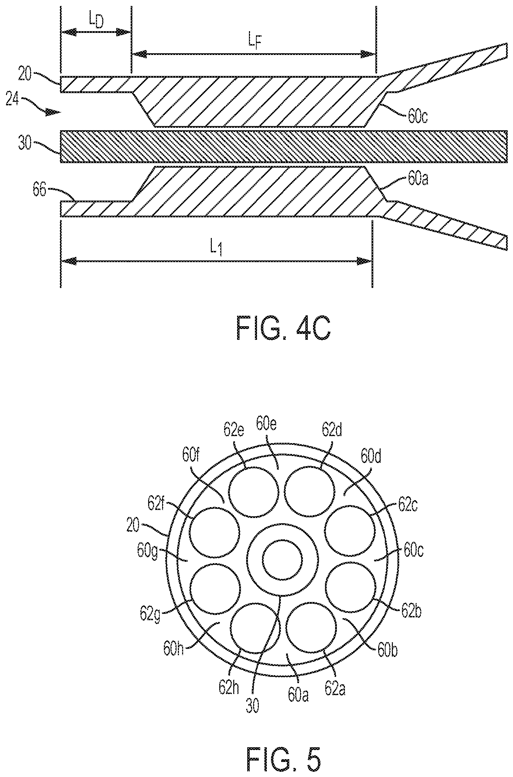

Referring again to Figure 2, the extrusion device 10 is shown as having a discrete die pin support feature 60; however, it should be appreciated that extrusion devices 10 in accordance with embodiments of the present disclosure may include continuous die pin support features 60. As used herein, the term "discrete feature" is used to refer to a die pin support feature 60 having a length L_{F} along the longitudinal axis 38 that is less than about half the length L₁ of the first section 26 of the die bushing 20. As used herein, the term "continuous feature" is used to refer to a die pin support feature 60 having a length L_{F} along the longitudinal axis 38 that is greater than about 50% of the length L₁ of the first section 26 of the die bushing 20. Figure 4A illustrates an exemplary extrusion die having four die pin support features 60a-60d. Figures 4B and 4C illustrate alternative configurations of the extrusion die shown in Figure 4C in accordance with embodiments of the present disclosure. Figure 4B illustrates a cross-sectional view of the extrusion die of Figure 4A taken along line A-A. Die pin support features 60a, 60c are shown in Figure 4B as being discrete die pin support features. Figure 4C illustrates an alternative cross-sectional view of the extrusion die of Figure 4A taken along line A-A. Die pin support features 60a, 60c are shown in Figure 4C as being continuous die pin support features. It should be appreciated that discrete die pin support features and continuous die pin support features are not mutually exclusive and embodiments of the present disclosure may include extrusions dies having at least one discrete die pin support feature and at least one continuous die pin support feature. Additionally, embodiments of the present disclosure may include more than one discrete die pin support feature 60 positioned at different locations along the length L₁ of the first section 26 of the die bushing 20.

Referring again to Figures 4B and 4C, the die pin support features 60a, 60c may not extend along the entire length of the die bushing 20 to the opening 24. Stated another way, the extrusion die may include a gap 66 between the die pin support 60 and the opening 24 of the die bushing 20 where the gap 66 has a length L_{D} along the longitudinal axis 38. The length L_{D} of the gap 66 may be, for example, less than about 25% of the length L₁ of the die bushing 20, or less than about 15% of the length L₁ of the die bushing 20, or even less than about 10% of the length L₁ of the die bushing 20.

According to embodiments of the present disclosure, extrusion devices 10 may include discrete die pin support features 60 having a shape that, in combination with at least one other discrete die pin support feature 60, form a plurality of holes 62 around the die pin 30. Figure 5 illustrates one such example where the extrusion die includes eight die pin support features 60a-60h having curved surfaces which, in combination, form the boundaries of eight holes 62a-62h. In the example shown in Figure 5, the die pin support features 60a-60h include two curved surfaces on opposite sides of the die pin support features. One of the curved surfaces of one of the die pin support features 60a-60h may be positioned to interact with one of the curved surfaces of another of the plurality of die pin support features 60a-60h to form the boundaries of a hole 62a-62h. While the die pin support features 60a-60h as shown in Figure 5 are described and labeled as being separate components in the present disclosure, it should be appreciated that the die pin support features 60a-60h may be portions of an integrally formed component which includes a plurality of holes 62a-62h. Furthermore, while the extrusion die of Figure 5 is shown as having eight die pin support features 60a-60h interacting to form eight 62a-62h, embodiments of the present disclosure are not so limited and may include any number of die pin support features 60. As further shown in Figure 5, the die pin 30 may include a die pin channel extending the length of the die pin 30. In the extrusion die shown in Figure 5, the die pin channel may provide a path through which air
pressure can escape from the die which may advantageously prevent collapse of the parison as the melt exits from opening 24.

As previously described, the die pin support feature 60 may be integrally formed on a surface of the die bushing 20 and extend into the channel in the direction of the die pin 30. The die pin support feature(s) 60 may be formed on the surface of the die bushing 20 through, for example, direct machining, mechanically bonding, or 3D printing. Referring again to Figures 4A-4C, an extrusion die having four die pin support features 60a, 60b, 60c. 60d extending from the surface of the die bushing 20 and into the channel 22 in the direction of the die pin 30. The extrusion die of Figures 4A-4C is shown as having a clearance fit between the die pin support features 60a, 60b and 60c and the die pin 30; however, it should be appreciated that the extrusion die may include an interference fit between the die pin support features 60a, 60b and 60c and the die pin 30. As used herein, the term "clearance fit" refers to a fit type where a first component can be axially inserted into and removed from a recess of a second component, but the first component cannot generally be moved in a transverse direction perpendicular to the axial direction when disposed in the recess. Stated another way, a clearance fit exists where the outer diameter of the first component and the inner diameter of the second component are sufficiently similar to permit one of the components to be fittingly received in the other component. In contrast, as used herein, the term "interference fit" refers to a fit between two parts that are maintained by frictional forces as opposed to by some other fastening arrangement (e.g., an adhesive or a fastener).

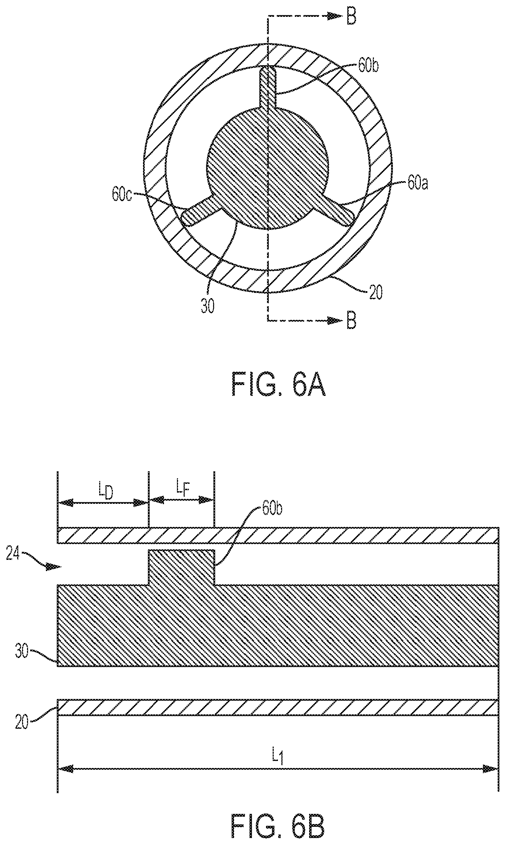

As previously described, the die pin support feature 60 may be integrally formed on a surface of the die pin 30 and extend into the channel 22 in the direction of the die bushing 20. The die pin support feature(s) 60 may be formed on the surface of the die pin 30 through, for example, direct machining, mechanically assembly, or by drawing/die forming. Figure 6A shows an example of a die pin 30 having three die pin support features 60a, 60b and 60c extending from the surface of the die and into the channel 22 in the direction of the die bushing 20. Figure 6B illustrates a cross-sectional view of the extrusion die of Figure 6A taken along line B-B. Figures 6A and 6B show a clearance fit between the die pin support features 60a, 60b and 60c and the die bushing 20; however, it should be appreciated that embodiments of the present disclosure may include an interference fit between the die pin support features 60a, 60b and 60c and the die bushing 20.

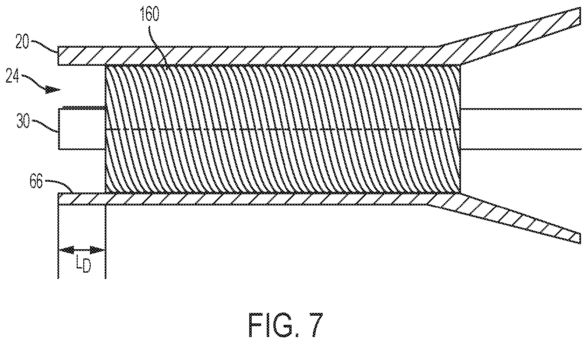

Figure 7 illustrates an extrusion die having a die pin 30 having spiral groove members formed thereon. As shown, the die pin 30 includes a spiral grooves 160 on its outer surface 18 with the groove 160 extending in a spiral manner along the outer surface of the die pin 30. The groove 160 provides raised die pin support features extending from the die pin 30 in the direction of the die bushing 20 and between which melt may flow along the die pin 30 and out of opening 24. Figure 7 shows a clearance fit between the groove 160 and the die bushing 20; however, it should be appreciated that embodiments of the present disclosure may include an interference fit between the groove 160 and the die bushing 20. The raised portions of the spiral groove 160 retain the position of the die pin within the channel 22 and prevent shifting of the die pin 30 relative to the die bushing 20. Additionally, the shape of the spiral groove 160 permits flow of the melt through channel 22 to opening 24. While Figure 7 shows the spiral groove 160 formed on the die pin 30, it should be appreciated that the spiral groove 160 may be formed on the die bushing 20 and extend into the channel 22 in the direction of the die pin 30. Alternatively, the spiral groove 160 may include portions attached to the die bushing 20 and other portions attached to the die pin 30.

## Claims

1. An extrusion device comprising:
an extrusion die comprising:
a die bushing (20) comprising a channel extending to an opening of the die bushing;
a die pin (30) positioned in the channel; and
a plurality of die pin support features (60a-60h) extending between the die pin and the die bushing having curved surfaces, wherein a curved surface of one of the plurality of die pin support features (60a-60h) interacts with a curved surface of another of the plurality of die pin support features (60a-60h) to form the boundaries of a hole (62a-62g).

2. The extrusion device of claim 1, wherein the die pin support features (60a-60h) comprise a first end attached to the die bushing (20) and a second end attached to the die pin (30).

3. The extrusion device of claim 1, wherein the die pin support features (60a-60h) are integrally formed on a surface of the die bushing (20).

4. The extrusion device of claim 1, wherein the die pin support features (60a-60h) are integrally formed on a surface of the die pin (30).

5. The extrusion device of claim 1 comprising at least one discrete die pin support feature.

6. The extrusion device of claim 1 comprising a plurality of discrete die pin support features.

7. The extrusion device of claim 1 comprising at least one continuous die pin support feature.

8. The extrusion device of claim 1 comprising at least one discrete die pin support feature and at least one continuous die pin support feature.

9. The extrusion device of claim 1 comprising a clearance fit between the die pin support features (60a-60h) and the die pin (30).

10. The extrusion device of claim 1 comprising an interference fit between the die pin support features (60a-60h) and the die pin (30).

11. The extrusion device of claim 1 comprising a clearance fit between the die pin support features (60a-60h) and the die bushing (20).

12. The extrusion device of claim 1 comprising an interference fit between the die pin support features (60a-60h) and the die bushing (20).

13. The extrusion device of claim 1, wherein the die pin support features (60a-60h) comprise a spiral groove member.

## Patentansprüche

1. Extrusionsvorrichtung, umfassend:
eine Extrusionsdüse, umfassend:
eine Düsenbuchse (20), die einen Kanal umfasst, der sich zu einer Öffnung der Düsenbuchse erstreckt;
einen Düsenstift (30), der in dem Kanal positioniert ist; und
eine Vielzahl von Düsenstiftstützmerkmalen (60a-60h), die sich zwischen dem Düsenstift und der Düsenbuchse erstrecken und gekrümmte Oberflächen aufweisen, wobei eine gekrümmte Oberfläche von einem aus der Vielzahl von Düsenstiftstützmerkmalen (60a-60h) mit einer gekrümmten Oberfläche von einem anderen aus der Vielzahl von Düsenstiftstützmerkmalen (60a-60h) interagiert, um die Grenzen eines Lochs (62a-62g) zu bilden.

2. Extrusionsvorrichtung nach Anspruch 1, wobei die Düsenstiftstützmerkmale (60a-60h) ein erstes Ende, das an der Düsenbuchse (20) angebracht ist, und ein zweites Ende, das an dem Düsenstift (30) angebracht ist, umfassen.

3. Extrusionsvorrichtung nach Anspruch 1, wobei die Düsenstiftstützmerkmale (60a-60h) einstückig auf einer Oberfläche der Düsenbuchse (20) gebildet sind.

4. Extrusionsvorrichtung nach Anspruch 1, wobei die Düsenstiftstützmerkmale (60a-60h) einstückig an einer Oberfläche des Düsenstiftes (30) gebildet sind.

5. Extrusionsvorrichtung nach Anspruch 1, umfassend zumindest ein einzelnes Düsenstiftstützmerkmal.

6. Extrusionsvorrichtung nach Anspruch 1, umfassend eine Vielzahl von einzelnen Düsenstiftstützmerkmalen.

7. Extrusionsvorrichtung nach Anspruch 1, umfassend zumindest ein durchgehendes Düsenstiftstützmerkmal.

8. Extrusionsvorrichtung nach Anspruch 1, umfassend zumindest ein einzelnes Düsenstiftstützmerkmal und zumindest ein durchgehendes Düsenstiftstützmerkmal.

9. Extrusionsvorrichtung nach Anspruch 1, umfassend eine Spielpassung zwischen den Düsenstiftstützmerkmalen (60a-60h) und dem Düsenstift (30).

10. Extrusionsvorrichtung nach Anspruch 1, umfassend eine Presspassung zwischen den Düsenstiftstützmerkmalen (60a-60h) und dem Düsenstift (30).

11. Extrusionsvorrichtung nach Anspruch 1, umfassend eine Spielpassung zwischen den Düsenstiftstützmerkmalen (60a-60h) und der Düsenbuchse (20).

12. Extrusionsvorrichtung nach Anspruch 1, umfassend eine Presspassung zwischen den Düsenstiftstützmerkmalen (60a-60h) und der Düsenbuchse (20).

13. Extrusionsvorrichtung nach Anspruch 1, wobei die Düsenstiftstützmerkmale (60a-60h) ein Spiralnutelement umfassen.

## Revendications

1. Dispositif d'extrusion comprenant :
une filière d'extrusion comprenant :
une bague de filière (20) comprenant un canal s'étendant jusqu'à une ouverture de la bague de filière ;
une aiguille de filière (30) positionnée dans le canal ; et
une pluralité de caractéristiques de support d'aiguille de filière (60 à 60h) s'étendant entre l'aiguille de filière et la bague de filière comportant des surfaces incurvées, dans lequel une surface incurvée de l'une de la pluralité de caractéristiques de support d'aiguille de filière (60a à 60h) interagit avec une surface incurvée d'une autre de la pluralité de caractéristiques de support d'aiguille de filière (60a à 60h) pour former les limites d'un trou (62a à 62g).

2. Dispositif d'extrusion selon la revendication 1, dans lequel les caractéristiques de support d'aiguille de filière (60a à 60h) comprennent une première extrémité fixée à la bague de filière (20) et une seconde extrémité fixée à l'aiguille de filière (30).

3. Dispositif d'extrusion selon la revendication 1, dans lequel les caractéristiques de support d'aiguille de filière (60a à 60h) sont formées d'un seul tenant sur une surface de la bague de filière (20).

4. Dispositif d'extrusion selon la revendication 1, dans lequel les caractéristiques de support d'aiguille de filière (60a à 60h) sont formées d'un seul tenant sur une surface de l'aiguille de filière (30).

5. Dispositif d'extrusion selon la revendication 1, comprenant au moins une caractéristique de support d'aiguille de filière discrète.

6. Dispositif d'extrusion selon la revendication 1, comprenant une pluralité de caractéristiques de support d'aiguille de filière discrètes.

7. Dispositif d'extrusion selon la revendication 1, comprenant au moins une caractéristique de support d'aiguille de filière continue.

8. Dispositif d'extrusion selon la revendication 1, comprenant au moins une caractéristique de support d'aiguille de filière discrète et au moins une caractéristique de support d'aiguille de filière continue.

9. Dispositif d'extrusion selon la revendication 1, comprenant un ajustement avec jeu entre les caractéristiques de support d'aiguille de filière (60a à 60h) et l'aiguille de filière (30).

10. Dispositif d'extrusion selon la revendication 1, comprenant un ajustement serré entre les caractéristiques de support d'aiguille de filière (60a à 60h) et l'aiguille de filière (30).

11. Dispositif d'extrusion selon la revendication 1, comprenant un ajustement avec jeu entre les caractéristiques de support d'aiguille de filière (60a à 60h) et la bague de filière (20).

12. Dispositif d'extrusion selon la revendication 1, comprenant un ajustement avec jeu entre les caractéristiques de support d'aiguille de filière (60a à 60h) et l'aiguille de filière (20).

13. Dispositif d'extrusion selon la revendication 1, dans lequel les caractéristiques de support d'aiguille de filière (60a à 60h) comprennent un élément de rainure en spirale.
